# EUROPÄISCHE PATENTSCHRIFT

(11) **EP 0 979 859 B1**
(45) Veröffentlichungstag und Bekanntmachung des Hinweises auf die Patenterteilung: **08.05.2002**
(21) Anmeldenummer: 99115393.3
(22) Anmeldetag: 04.08.1999
(51) Int. Cl.: C10M 105/36, C10M 171/00, C09K 5/04, C10M 107/28, C10N 20/02

(54) **Kohlendioxid und einen Polyester enthaltende Kühlarbeitsflüssigkeitzusammensetzungen**
Working fluid compositions comprising carbon dioxide and a polyester
Compositions de fluides de travail comprenant du dioxide de carbon et un polyester

(30) Priorität: 05.08.1998 DE 19835226
(43) Veröffentlichungstag der Anmeldung: 16.02.2000
(73) Patentinhaber: FUCHS DEA Schmierstoffe GmbH & Co. KG, 68169 Mannheim (DE)
(72) Erfinder: Fahl, Jörg, 31197 Hattorf (DE); Knickmeyer, Rainer, 20144 Hamburg (DE); Dettmann, Peter, 21244 Buchholz (DE)
(74) Vertreter: Schupfner, Gerhard D., Dr. Dipl.-Chem.

(56) Entgegenhaltungen:
- EP-A- 0 452 509
- EP-A- 0 568 348
- GB-A- 2 306 497
- US-A- 5 435 928

## Beschreibung

Gegenstand der Erfindung sind Betriebsmittelzusammensetzungen enthaltend Schmierstoffe auf Basis von Kohlenwasserstoff-Verbindungen enthaltend Ester-Gruppen, die sich zur Schmierung von Kältemaschinen, Wärmepumpen und verwandter Anlagen, wie Klimaanlagen, die mit Kohlendioxid als Betriebsmittel betrieben werden, eignen.

Kohlendioxid ist bereits zu Beginn der modernen Kältetechnik als Kältemaschinen-Betriebsmittel verwendet worden. So baute die Firma Linde bereits im Jahre 1881 die erste Kompressions-Kältemaschine unter Verwendung von Kohlendioxid als Kältemittel. Noch bis zur Mitte dieses Jahrhunderts wurde Kohlendioxid vorwiegend in Schiffskälteanlagen meist unterhalb seiner kritischen Temperatur (kritischer Punkt Tₖ=31,4°C / pₖ=72,9 bar) eingesetzt. Als Schmierstoff wie auch als Sperrflüssigkeit kam Glyzerin zum Einsatz. Später, mit der Einführung der FCKW-Kältemittel, ist Kohlendioxid kaum noch eingesetzt worden.

Der Ausstieg aus umweltschädigenden Fluor-Chlor-Kohlenwasserstoffen (FCKW) als Kältemaschinen-Betriebsmittel hat dazu geführt, Kohlendioxid als mögliches Betriebsmittel für Kältemaschinen erneut in Betracht zu ziehen. Kohlendioxid ist leicht und günstig verfügbar und übt keinen schädigenden Einfluß auf die Ozonschicht aus. Kohlendioxid zeichnet sich als Kältemaschinen-Betriebsmittel weiterhin durch günstige thermodynamische Eigenschaften, wie z.B. eine relativ hohe volumetrische Kälteleistung und ein niedriges Druckverhältnis (p_{c}/pₛ-Index) sowie einen daraus resultierenden guten Anlagenwirkungsgrad aus.

Erst Ende der 80er Jahre wurde die Entwicklungsarbeit mit dem natürlichen Kältemittel CO₂ wieder aufgenommen. Erste Versuche zeigten die technischen Möglichkeiten eines transkritischen, auch überkritisch genannten, Kohlendioxid-Kreisprozesses mit Drücken von über 100 bar auf.

Inzwischen haben verschiedene Forschungsstellen dieses Konzept aufgegriffen und arbeiten an der Realisierung geeigneter Kälteanlagen. Gleichzeitig wird jedoch auch an der Weiterentwicklung des herkömmlichen Verfahrens im unterkritischen Bereich gearbeitet.

Für Kohlendioxid als Kältemaschinenbetriebsmittel sind gegenüber konventionellen Kältemitteln wie Fluor/Chlor- oder Fluor-Kohlenwasserstoffen erhöhte Betriebsdrücke und Betriebstemperaturen erforderlich, die hohe Anforderungen an Dichtungsmaterialien, bewegliche Teile und Schmiermittel stellen. Dies gilt insbesondere für Kältemaschinenanlagen, die in einem transkritischen Kreisprozeß betrieben werden. Als Schmierstoffe für beide Verfahrensweisen wurden bereits Polyalkylenglykole (siehe z.B. U. Hesse und H.O. Spauchus in Refrigeration Science and Technology, Proceedings, Aarhus Denmark 3. -6. Sept. 1996, Seiten 14.7 - 14.8, ISSN 0151163), Neopentylpolyester (siehe GB 2 306 497 und DE 197 19 132.0) und Polyvinylether (JP 1998/10-46169) vorgeschlagen.

Die GB 2 306 497 offenbart Betriebsmittelzusammensetzungen aus Kohlendioxid und einem Schmiermittel, dass mindestens eine Polyolesterverbindung enthält. Das Betriebsmittel wird als Kühlmittel in CO₂-Kältemaschinen eingesetzt. Die offenbarten Polyolesterverbindungen werden durch Veresterung von mindestens einem Polyol, wie beispielsweise Neopentylpolyol, mit einer Monocarbonsäure und ggf. zusätzlich einem weiteren Anteil einer Dicarbonsäure hergestellt.

Aus der EP 0 452 509 und der EP 0 568 348 sind Esterverbindungen als Schmiermittel für Kältemaschinenbetriebsmittel auf Basis von Fluorkohlenwasserstoffen bekannt. Die offenbarten Verbindungen weisen dabei je mindestens ein Sauerstoffatom bzw. einen Esterbrücke in der Hauptkette des Moleküls auf und unterscheiden sich somit von den erfindungsgemäßen Estern.

Aus US 5 435 928 sind Polyesterverbindungen bekannt, die kopolymere aus α-β-ungessätigten dicarboxylsäureestern und α-Olefinen sind.

In einem transkritischen Kreisprozeß werden im Laufe des Kompressionszyklusses Zustände durchlaufen, in denen sich das Kohlendioxid als Betriebsmittel sowohl im subkritischen (unterkritischen) Zustand als auch im superkritischen (überkritischen) Zustand befindet.

Erste Untersuchungen von mit CO₂ betriebenen Klima- und Kältekreisläufen zeigen, daß aufgrund der guten Mischbarkeit von Polyolester-Schmierstoffen, eine entsprechend hohe Löslichkeit erzielt wird. Damit verbunden kann es zu einem dramatischen Viskositätsabfall im Bereich des Kältemittelverdichters kommen.

Unter den hier herrschenden Bedingungen zeigen weniger gut lösliche/mischbare Schmierstoffe, wie z. B. Mineralöle, Polyolefine, Alkylbenzole oder einigen der erfindungsgemäßen Verbindungen, dagegen nicht den erwähnten Viskositätsabfall. Weisen diese Verbindungen zudem eine vergleichsweise hohe Dichte auf, kann je nach konstruktiver Auslegung der Anlage eine effektive Phasentrennung stattfinden, bei der die erfindungsgemäßen Verbindungen entsprechend Ihrer höheren Dichte die untere und Kohlendioxid die obere Phase bildet. Ein Rückfluß der erfindungsgemäßen Kohlenwasserstoff-Verbindungen zum Kompressor ist somit bei entsprechendem Anlagendesign gewährleistet. Dies ist für die Mischungsverhältnisse Kohlendioxid Schmiermittel wichtig, für die eine vollständige Mischbarkeit des Schmiermittels in Kohlendioxid nicht mehr gegeben ist.

Zum einen muß die Anforderung im Verdichter, d. h. im Schmierspalt entsprechend hohe Gemischviskosität zu erreichen, erfüllt werden, zum anderen muß eine partielle Löslichkeit bei tiefen Temperaturen im Bereich der Komponenten Verdampfer und Saugleitung gewährleistet sein, um gute Wärmeübergänge und die Ölrückführung zu garantieren. Eine sogenannte Teilmischbarkeit, d.h. eine in einem bestimmten Temperaturbereich für gewisse Mischungsverhältnisse vorhandene Mischungslücke, ist hier von großem Interesse. Bedingt durch das vorteilhafte Temperatur- /Löslichkeitsverhalten können für diesen Fall auch Kältemaschinen verwendet werden, die ohne Ölsumpf bzw. Ölrückführung arbeiten.

Einige Schmiermittel sind für höhere Massenanteile (> 50 Gew.%) im CO₂ Betriebsmittel über den gesamten Temperaturbereich bis unter -55°C löslich bzw. mischbar, weisen dann einen Bereich auf in dem Sie mit dem Betriebsmittel Kohlendioxid nicht mehr mischbar sind, und sind Sie bei geringeren Anteilen (0,1 bis 10 Gew.%) erneut über den gesamten Temperaturbereich von einer höheren in Kältemaschinen üblichen Temperatur bis etwa -55°C löslich bzw. mischbar. Diese Eigenschaft des Schmiermittels wird als Teilmischbarkeit bezeichnet.

Der Erfindung liegt das Problem zugrunde, Verbindungen zu finden, die neben den oben genannten auch folgende Anforderungen an Schmiermittel für CO₂-Kältemaschinen genügen:
- ausgezeichnete thermische und chemische Stabilität,
- eine außergewöhnliche hydrolytische Stabilität,
- sehr gute Schmierungseigenschaften,
- extrem gutes Lasttragevermögen,
- eine Mischbarkeit oder ggf. eine Teilmischbarkeit mit CO₂,
- eine geringe Hygroskopizität,
- hohe Verträglichkeit mit Dichtmaterialien und
- gutes Viskositäts-Temperatur-Verhalten. aufweisen.

Dies gilt im besonderen Maße auch für die Anwendungen in CO₂-betriebenen Kältemaschinen, die überkritisch arbeiten.

Überraschend haben sich zur Lösung dieser Aufgaben als geeignet erwiesen: Betriebsmittelzusammensetzungen für Kältemaschinen, Wärmepumpen und verwandte Anlagen, wie Klimaanlagen, enthaltend Kohlendioxid als Betriebsmittel und eine Kohlenwasserstoff-Verbindung als Schmiermittel, die eine Kohlenstoffkette mit mindestens 6, vorzugsweise mindestens 8, besonders bevorzugt mindestens 12, Kohlenstoffatomen aufweist, die zumindest 4, vorzugsweise zumindest 6 Gruppen, der Formel

-(CH₂)ₘ-C(=O)-O-R¹

trägt, sowie ggf. zusätzlich eine oder mehrere der beiden Gruppen

-R² und -R³

aufweist, worin - jeweils unabhängig voneinander - und ggf. für jede Seitengruppe unterschiedlich
- R¹ und R²: verzweigte oder unverzweigte C1- bis C20-Kohlenwasserstoff-Gruppe sind, die ggf. 1 bis 4 Ether-Gruppen (-O-) aufweisen und ggf. endständige -OH Gruppen tragen können,
- R³: H oder eine verzweigte oder unverzweigte C1- bis C20-Kohlenwasserstoff-Gruppe ist und
- m: eine ganze Zahl von 0 bis 20, vorzugsweise von 0 bis 4 ist.

Weisen R¹ und R² Ether-Gruppen auf, so sind diese Reste z.B. so ausgebildet, daß diese Alkylenoxid - Einheiten, wie Ethylenoxid - Einheiten (-CH₂CH₂-O-) oder Propylenoxid - Einheiten (-CHCH₃CH₂-O-), aufweisen. Vorzugsweise ist R² so aufgebaut, daß es mittels einer Ether-Bindung mit der Kohlenstoffkette verbunden ist.

Die erfindungsgemäßen Kohlenwasserstoff-Verbindungen weisen vorzugsweise eine kinematische Viskosität von 10 bis 400 mm²/s (cSt), besonders bevorzugt von 25 bis 200 mm²/s bei 40°C gemessen nach DIN 51562 auf. Sie haben weiterhin vorzugsweise ein mittleres Molekulargewicht (Zahlenmittel) von 300 bis 3000 g/mol, besonders bevorzugt von 500 bis 1800 g/mol. Die erfindungsgemäßen Kohlenwasserstoff-Verbindungen können Doppelbindungen aufweisen.

Die erfindungsgemäßen Kohlenwasserstoff-Verbindungen können weiterhin Polymerester-Verbindungen sein, die folgende Strukureinheit mit Carboxylgruppen enthaltenden benachbarten Seitengruppen aufweisen:

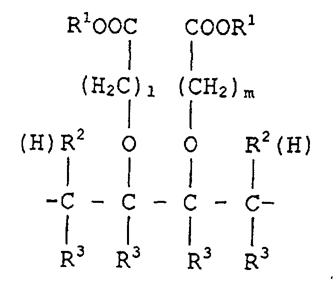

Dies sind z.B. Copolymere einer oder mehrerer ungesättigter Dicarbonsäureester, worin die Alkoholgruppe (R¹) eine lineare oder verzweigte C1- bis C20-Alkoholgruppe ist, mit einem oder mehreren C2- bis C22- α-Olefinen (R²). I hat die Bedeutung von m.

Die zur Herstellung der Copolymere eingesetzten Dicarbonsäuren sind insbesondere Maleinsäure sowie deren Derivate. Es können aber auch andere α,β-ungesättigte-1,4-Dicarbonsäuren bzw. deren Derivate, wie z.B. Fumarsäure, Citraconsäure, Mesaconsäure und Itaconsäure oder Isomere ungesättigter Dicarbonsäuren, bei denen die Doppelbindung anders als α,β-ständig angeordnet ist, wie z.B. β,χ- oder χ,δ-Heptendicarbonsäure. Derivate im Sinne der Erfindung sind Carbonsäurehalogenide, -anhydride und/oder -ester.

Die Alkoholgruppe der Dicarbonsäure-Monomereneinheit kann eine unverzweigte oder verzweigte C2- bis C20- Kohlenwasserstoff- oder Polyether-Gruppe von der Dimension C2 bis C6 sein. Als α-Olefine können ein oder mehrere C2- bis C22- α-Olefine insbesondere C3- bis C14-, besonders bevorzugt C4- bis C12-, α-Olefine in die erfindungsgemäße Kohlenwasserstoff-Verbindung eingebaut sein.

Den Polymerester-Verbindungen kann, wenn Sie aus Maleinsäure-Verbindungen hergestellt sind, u.a. folgende Struktur zugeschrieben werden: 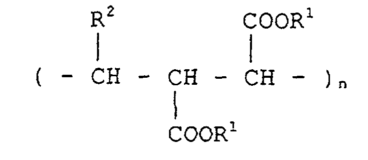 mit R¹ , R² = H, C1- bis C20- Kohlenwasserstoff- oder Polyether-Kette und n größer oder gleich 2.

Es haben sich aber auch Verbindungen, die nicht durch obige Struktur wiedergegeben werden können, als besonders vorteilhaft erwiesen. Dies sind z.B. Copolymere von oben beschriebenen α-Olefinen und Dicarbonsäuren, die zu mehr als 50%, vorzugsweise zu mehr als 70 %, besonders bevorzugt zu mehr als 90 %, aus Dicarbonsäureester-Einheiten bestehen bzw. enthalten, die also zum überwiegenden Teil (größer gleich 50 %) aus Dicarbonsäureeinheiten bestehen.

Copolymere, die zu mehr als 70 %, besonders bevorzugt zu mehr als 90 %, aus Dicarbonsäureester-Einheiten bestehen, weisen die weiter oben beschriebene Eigenschaft der Teilmischbarkeit in Kohlendioxid auf.

Zusätzlich können in der Betriebsmittelzusammensetzung übliche Additive wie Verschleißverbesserer, Anti-Schaummittel, Antioxidantien, wie alkylierte aminische Antioxidantien (insbesondere Irganox® L57), Viskositätsindex-Verbesserer, Korrosionsschutzmittel oder auch Hochdruck-Additive, wie insbesondere Phosphorsäureester (insbesondere Triarylphosphate) enthalten sein.

Weiterhin können die erfindungsgemäß eingesetzten Schmiermittel zusammen mit Neopentylpolyolestern, vorzugsweise solchen aus der DE 197 19 132, und/oder Polyalkylenglykolen, vorzugsweise solchen aus der DE 197 19 430 und der DE 197 39 288 sowie Poly-α-Olefinen oder Polyvinylethern als Schmiermittel eingesetzt werden.

Die Betriebsmittelzusammensetzung enthält im allgemeinen zwischen 1 und 30 Gew.% Schmiermittel - diese Größe kann jedoch abhängig vom Typ der Kältemaschine auch außerhalb des angegebenen Bereichs liegen -, wobei vorzugsweise mindestens 40 Gew.% der Zusätze zum Betriebsmittel (bezogen auf alle Inhaltsstoffe des Betriebsmittels) erfindungsgemäße Verbindungen sind.

Die Betriebsmittel werden in Kältemaschinen, Wärmepumpen und verwandten Anlagen, wie Klimaanlagen, vorzugsweise in Kältemaschinen für Fahrzeuge verwendet. Weisen die erfindungsgemäßen Verbindungen die oben beschriebene Teilmischbarkeit mit Kohlendioxid auf, so können Kälteanlagen eingesetzt werden, die keine Vorrichtungen für eine Ölrückführung innerhalb des Betriebsmittelkreislaufes enthalten.

## Patentansprüche

1. Betriebsmittelzusammensetzungen enthaltend Kohlendioxid und eine Kohlenwasserstoff-Verbindung, die eine lineare oder verzweigte Kohlenstoffkette mit mindestens 6 Kohlenstoffatomen aufweist und die Rohlenstoffkette zumindest
4 -(CH₂)ₘ-C(=O)-O-R¹ -Gruppen
trägt, sowie ggf. zusätzlich eine oder mehrere der beiden Gruppen
-R² und -R³ ,
worin - jeweils unabhängig voneinander - und ggf. für jede Gruppe unterschiedlich
R¹ und R² unabhängig voneinander verzweigte oder unverzweigte C1- bis C20-Kohlenwasserstoff-Gruppen sind, die ggf. 1 bis 4 Ether-Gruppen (-O-) und ggf. eine -OH Gruppen tragen können,
R³ H oder eine verzweigte oder unverzweigte C1- bis C20-Kohlenwasserstoff-Gruppe ist und
m eine ganze Zahl von 0 bis 20 ist.

2. Betriebsmittelzusammensetzung nach Anspruch 1, **dadurch gekennzeichnet, daß** R² zumindest eine Ether-Gruppe (-O-) aufweist, die unmittelbar an die Kohlenstoffkette gebunden ist.

3. Betriebsmittelzusammensetzung nach Anspruch 1 oder 2 , **dadurch gekennzeichnet, daß** m gleich Null ist.

4. Betriebsmittelzusammensetzung nach einem der vorhergehenden Ansprüche, **dadurch gekennzeichnet, daß** die Kohlenwasserstoff-Verbindung eine kinematische Viskosität von 10 bis 400 mm²/s, vorzugsweise 25 bis 200 mm²/s, bei 40°C gemessen nach DIN 51562 aufweist.

5. Betriebsmittelzusammensetzung einem der vorhergehenden Ansprüche, **dadurch gekennzeichnet, daß** die Kohlenwasserstoff-Verbindung ein Copolymer ist, das zu mindestens 50 %, besonders bevorzugt zu mehr als 70 %, aus Dicarbonsäureester-Einheiten besteht.

6. Betriebsmittelzusammensetzung nach einem der vorhergehenden Ansprüche, **dadurch gekennzeichnet, daß** die Kohlenwasserstoff-Verbindung ein Copolymer ist, herstellbar unter Umsetzung von einer oder mehrerer ungesättigter Dicarbonsäureester, deren Alkoholgruppen lineare oder verzweigte C1- bis C12-Kohlenwasserstoff-Gruppen aufweisen mit einem oder mehreren C2- bis C16- α-Olefinen.

7. Betriebsmittelzusammensetzung einem der Ansprüche 5 oder 6 , **dadurch gekennzeichnet, daß** die Kohlenwasserstoff-Verbindung unter Einsatz von Dicarbonsäuren bzw. deren Derivaten mit mindestens 4 Kohlenstoffatomen, herstellbar ist.

8. Betriebsmittelzusammensetzung nach einem der Ansprüche 5 bis 7, **dadurch gekennzeichnet, daß** die Kohlenwasserstoff-Verbindung unter Einsatz einer oder mehrerer ungesättigter Dicarbonsäureester, worin die Alkoholgruppe eine C2- bis C6- Kohlenwasserstoff-Gruppe ist, herstellbar ist.

9. Betriebsmittelzusammensetzung nach einem der vorhergehenden Ansprüche, **dadurch gekennzeichnet, daß** die Betriebsmittelzusammensetzung Kohlenwasserstoff-Verbindungen bzw. deren Gemische enthält, die ein mittleres Molekulargewicht von 300 bis 3000 g/mol, besonders bevorzugt von 500 bis 1800 g/mol aufweisen.

10. Betriebsmittelzusammensetzung nach einem der vorhergehenden Ansprüche, **dadurch gekennzeichnet, daß** die Betriebsmittelzusammensetzung zu mindestens 40 Gew.% bezogen auf alle Zusatzstoffe zum Betriebsmittel aus der Kohlenwasserstoff-Verbindung gemäß einem der vorhergehenden Ansprüche besteht.

11. Verwendung der Betriebsmittelzusammensetzung gemäß einem der vorhergehenden Ansprüche in Kältemaschinen, vorzugsweise in Kältemaschinen für Fahrzeuge.

## Claims

1. Operating material compositions containing carbon dioxide and a hydrocarbon compound that comprises a linear or branched carbon chain with at least 6 carbon atoms, and the carbon chain carries at least
4 -(CH₂)ₘ-C(=O)-O-R¹ groups
as well as optionally in addition one or more of the two groups
-R² and -R³,
wherein each independently of one another and optionally different for each group,
R¹ and R² are independently of one another branched or unbranched C1- to C20-hydrocarbon groups, which optionally can comprise 1 to 4 ether groups (-O-) and optionally can carry -OH groups;
R³ is H or a branched or unbranched C1- to C20-hydrocarbon group, and
m is a whole number from 0 to 20.

2. Operating material composition according to claim 1, **characterized in that** R² comprises at least one ether group (-O-), which is directly bound to the carbon chain.

3. Operating material composition according to claim 1 or 2, **characterized in that** m is equal to zero.

4. Operating material composition according to one of the preceding claims, **characterized in that** the hydrocarbon compound has a kinematic viscosity of 10 to 400 mm²/s, preferably 25 to 200 mm²/s, measured at 40 °C according to DIN 51562.

5. Operating material composition according to one of the preceding claims, **characterized in that** the hydrocarbon compound is a copolymer that consists at least 50 %, particularly preferred more than 70 %, of dicarboxylic acid ester units.

6. Operating material composition according to one of the preceding claims, **characterized in that** the hydrocarbon compound is a copolymer that obtainable by reaction of one or more unsaturated dicarboxylic acid esters, whose alcohol groups comprise linear or branched C1- to C12-hydrocarbon groups, with one or more C2- to C16-α-olefins.

7. Operating material composition according to one of claims 5 or 6, **characterized in that** the hydrocarbon compound is obtainable by using dicarboxylic acids or derivatives thereof with at least 4 carbon atoms.

8. Operating material composition according to one of claims 5 to 7, **characterized in that** the hydrocarbon compound is obtainable by using one or more unsaturated dicarboxylic acid esters, wherein the alcohol group is a C2- to C6- hydrocarbon group.

9. Operating material composition according to one of the preceding claims, **characterized in that** the operating material composition contains hydrocarbon compounds or mixtures thereof, which have an average molecular weight of 300 to 3000 g/mol, particularly preferred 500 to 1800 g/mol.

10. Operating material composition according to one of the preceding claims, **characterized in that** the operating material composition consists at least of 40%w/w relative to all additives to the operating material of the hydrocarbon compound according to one of the preceding claims.

11. Use of the operating material composition according to one of the preceding claims in refrigerating machines, preferably in refrigerating machines for motor vehicles.

## Revendications

1. Compositions de fluide de service contenant du dioxyde de carbone et un composé hydrocarboné qui présente une chaîne carbonée linéaire ou ramifiée contenant au moins 6 atomes de carbone, la chaîne carbonée portant au moins 4 groupes -(CH₂)ₘ-C(=O)-O-R¹ ainsi que, le cas échéant, un ou plusieurs des deux groupes -R² et -R³, dans lesquelles - toujours indépendamment les unes des autres - et le cas échéant différemment pour chaque groupe,
R¹ et R² sont ramifiés ou non ramifiés indépendamment l'un de l'autre des groupes hydrocarbures en C₁ à C₂₀ qui peuvent le cas échéant porter 1 à 4 groupes éthers (-O-) et le cas échéant un groupe -OH,
R³ est H ou un groupe hydrocarbure en C₁ à C₂₀ ramifié ou non ramifié, et
m est un nombre entier valant de 0 à 20.

2. Composition de fluide de service selon la revendication 1, **caractérisée en ce que** R² présente au moins un groupe éther (-O-) qui est immédiatement lié à la chaîne carbonée.

3. Composition de fluide de service selon la revendication 1 ou la revendication 2, **caractérisée en ce que** m est égal à zéro.

4. Composition de fluide de service selon l'une des revendications précédentes, **caractérisée en ce que** le composé carboné présente une viscosité cinématique de 10 à 400 mm²/s, de préférence de 25 à 200 mm²/s, mesurée à 40°C suivant DIN 51562.

5. Composition de fluide de service selon l'une des revendications précédentes, **caractérisée en ce que** le composé carboné est un copolymère qui se compose à au moins 50%, de préférence à plus de 70% d'unités esters d'acides dicarboxyliques.

6. Composition de fluide de service selon l'une des revendications précédentes, **caractérisée en ce que** le composé carboné est un copolymère qui peut être préparé en faisant réagir un ou plusieurs esters d'acides dicarboxyliques insaturés dont les groupes alcools présentent des groupes hydrocarbures en C₁ à C₁₂ avec une ou plusieurs α-oléfines en C₂ à C₁₆.

7. Composition de fluide de service selon l'une des revendications 5 ou 6, **caractérisée en ce que** le composé carboné peut être préparé en utilisant des acides dicarboxyliques ou des dérivés de ceux-ci ayant au moins 4 atomes de carbone.

8. Composition de fluide de service selon l'une des revendications 5 à 7, **caractérisée en ce que** le composé carboné peut être préparé en utilisant un ou plusieurs esters d'acides dicarboxyliques insaturés dans lesquels le groupe alcool est un groupe hydrocarbure en C₂ à C₆.

9. Composition de fluide de service selon l'une des revendications précédentes, **caractérisée en ce que** la composition de fluide de service contient des composés carbonés, ou des mélanges de ceux-ci, qui présentent une masse moléculaire moyenne de 300 à 3000 g/mol, de façon particulièrement préférée de 500 à 1800 g/mol.

10. Composition de fluide de service selon l'une des revendications précédentes, **caractérisée en ce que** la composition de fluide de service se compose à au moins 40%, ramené à l'ensemble des additifs ajoutés au fluide de service, du composé carboné selon l'une des revendications précédentes.

11. Utilisation de la composition de fluide de service selon l'une des revendications précédentes dans des machines réfrigérantes, de préférence dans des machines réfrigérantes pour véhicules.
